# EUROPEAN PATENT APPLICATION

(11) **EP 1 761 006 A2**
(43) Date of publication of application: **07.03.2007**
(21) Application number: 06013629.8
(22) Date of filing: 30.06.2006
(51) Int. Cl.: H04M 1/725

(54) **Method for processing instant message in wireless terminal and wireless terminal implementing the same**

(30) Priority: 02.09.2005 KR 20050081704
(71) Applicant: Samsung Electronics Co., Ltd., Suwon-si, Gyeonggi-Do (KR)
(72) Inventor: Kwak, Won-Sook, Yeongtong-gu Suwon-si Gyeonggi-do (KR); Choi, Yun-Jeong, Yeongtong-gu Suwon-si Gyeonggi-do (KR)
(74) Representative: Lang, Johannes

(57) **Abstract**

Method and wireless terminal which has a messenger service function, for executing the messenger service function when subscriber information for executing the messenger service function is input are provided. The instant message is generated according to execution of the messenger service function. The generated instant message is stored while applying identifier information corresponding to the subscriber information to the generated instant message, when an instant message storage key is operated.

## Description

### BACKGROUND OF THE INVENTION

### Field of the Invention

The present invention relates to a method for processing an instant message in a wireless terminal having a messenger service function, and a wireless terminal implementing the same. More particularly, the present invention relates to a method and apparatus for storing instant messages, which are generated through an instant messenger service, according to each user, and outputting the stored instant messages according to each user in a wireless terminal.

### Description of the Related Art

A messenger service is an on-line service, which enables users to directly give and receive messages on-line by using a technology called "instant messaging". Also, the messenger enables a user to communicate with either another user or plural other users, which is/are connected to the Internet, by using a messenger program.

In order to be provided with the messenger service, first, a specific application need to be installed in terminals for using the messenger service. Then, when the terminal of a second messenger user, which has been registered for the messenger service in the terminal of a first messenger user, logs on, the first messenger user needs to be informed that the second messenger user has logged on. That is, the messenger service refers to a client software. In addition, when an instant message is received from a second messenger user by a first messenger user through the messenger service, the first messenger user is informed. A list established in advance by a messenger user is called a "buddy list", which represents a list of coworkers, working group members, and/or friends, with which the messenger user wants to communicate on-line. The messenger program is often used to check whether persons registered in the list accesses the network. Since such messenger service enables a user to confirm that another user accesses the Internet, a response for a call can be immediately made. Now, the messenger service is applied to not only a wired communication system but also a wireless communication system, and also operates in cooperation with wired and wireless communication systems.

According to the messenger service, since there is a messenger service subscriber recognizing function, such as log in, a plurality of messenger service subscribers may use the messenger service through one wireless terminal by using each subscriber identifier, and also one messenger service subscriber may use a plurality of identifiers in order to use the messenger service. In addition, the messenger service provides a function of giving and taking instant messages among a plurality of messenger service users, and also provides an instant message storing function for storing instant messages generated during a messenger service execution, and an instant message output function for outputting the stored instant messages.

However, instant messages generated during a messenger service execution are stored only in a time sequence without distinction of subscribers, and the instant messages stored in a time sequence are output in the same order as they are input. Therefore, when one user stores the instant messages by using a plurality of identifiers, or when a plurality of subscribers stores the instant messages by using their own identifiers, it is difficult for the user to find the instant messages stored by the user himself during the messenger service execution, which causes considerable inconvenience to the user.

### SUMMARY OF THE INVENTION

Accordingly, the present invention has been made to address at least the above-mentioned problems occurring in the prior art, and an object of the present invention is to provide a method for recognizing and storing instant messages according to subscriber information when the instant messages are generated during a messenger service in a wireless terminal having the messenger service function.

Another object of the present invention is to provide a method for outputting instant messages stored in a wireless terminal, which has a messenger service function, according to subscriber information.

To accomplish these and other objects, in accordance with one exemplary aspect of the present invention, there is provided a method and a wireless terminal which has a messenger service function, for storing an instant message, where the messenger service function is executed when subscriber information for executing the messenger service function is input. The instant message is generated according to execution of the messenger service function. The generated instant message is stored while applying identifier information corresponding to the subscriber information to the generated instant message, when an instant message storage key is operated.

In accordance with another exemplary aspect of the present invention, there is provided a method and a wireless terminal which has a messenger service function, for outputting an instant message, where identifier information of the stored instant message is checked, when an instant message output key for outputting the stored instant message is operated, Identifier information of subscriber information corresponding to an instant message to be output is compared with the identifier information of the stored instant message, when the subscriber information is input. An instant message of identifier information corresponding to the input subscriber information is read, and the read instant message is output.

### BRIEF DESCRIPTION OF THE DRAWINGS

The above and other objects, features and advantages of the present invention will be more apparent from the following detailed description taken in conjunction with the accompanying drawings, in which like reference numerals will be understood to refer to like parts, components and structures, where:
FIG. 1 is a block diagram illustrating a construction of a wireless terminal according to an exemplary embodiment of the present invention;
FIG. 2 is a flowchart illustrating a procedure of storing an instant message generated during the execution of a messenger service function according to an exemplary embodiment of the present invention;
FIG. 3 is a flowchart illustrating a procedure of outputting a stored instant message according to an exemplary embodiment of the present invention;
FIGs. 4A to 4C are views for explaining the operation of inputting subscriber information for a messenger service according to an exemplary embodiment of the present invention; and
FIGs. 5A to 5C are views for explaining the operation of outputting a stored instant message according to an exemplary embodiment of the present invention.

### DETAILED DESCRIPTION OF EXEMPLARY EMBODIMENTS

Hereinafter, exemplary embodiments of the present invention will be described with reference to the accompanying drawings. In the following description, a detailed description of well understood functions and configurations incorporated herein will be omitted for clarity and conciseness.

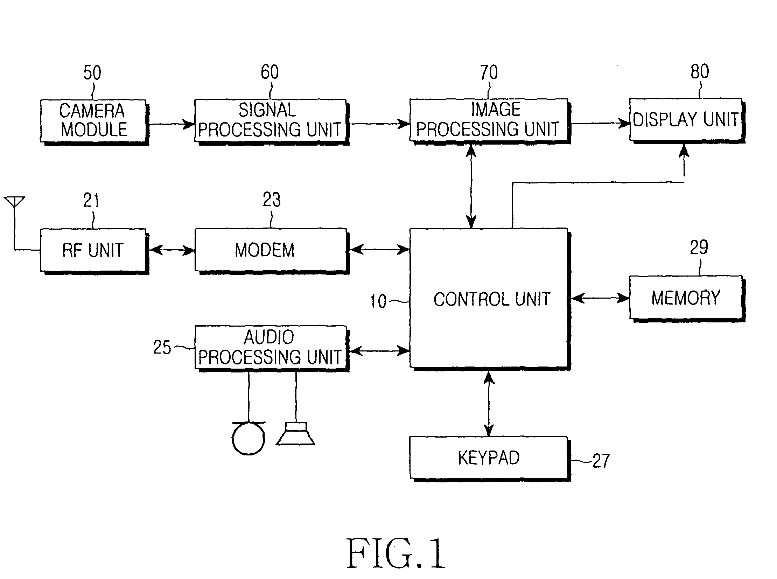

FIG. 1 is a block diagram illustrating a construction of a wireless terminal according to an embodiment of the present invention. An RF unit 21 performs transmission and reception function of the wireless terminal. The RF unit 21 includes an RF transmitter and an RF receiver. The RF transmitter up-converts a frequency of a signal to be transmitted and amplifies the signal. The RF transmitter low-noise amplifies a received signal and down-converts a frequency of the received signal.

A modem 23 includes a transmitter for encoding and modulating the signal to be transmitted, and a receiver for demodulating and decoding the received signal.

An audio processing unit 25 may include a codec, which has a data codex for processing packet data or the like, and an audio codec for processing audio signals such as a voice. The audio processing unit 25 converts the digital audio signals received in the modem 23 into analog signals through the audio codec for reproduction of the digital audio signals, and converts transmission analog audio signals generated from a microphone into digital audio signals through the audio codec and transmits the converted digital audio signals to the modem 23. The codec may be separately provided or may be included in a controller 10.

A key pad unit 27 includes keys for inputting numeral and character information and function keys for setting various functions. Also, the key pad unit 27 may include a messenger service execution key, an instant message storage key, and a stored-instant-message output key according to an embodiment of the present invention.

A memory 29 may include a program memory and a data memory. The program memory stores programs for controlling the general operation of the wireless terminal. Also, according to an embodiment of the present invention, the program memory stores a program for executing the messenger service function. The data memory temporarily stores data generated in the course of executing the programs. Also, the data memory stores instant messages according to the instant message storing function.

The control unit 10 controls the operation of the wireless terminal. The control unit 10 may include the modem 23 and/or the codec. Also, when receiving subscriber information for executing the messenger service function, the control unit 10 transmits the receive subscriber information to a server. Then, when it is determined through the analysis of the server that the received subscriber information represents a registered subscriber, the control unit 10 controls the messenger service function to be executed. Also, sensing the input signal of the instant message storage key, the control unit 10 controls that an instant message generated during the execution of the messenger service function is stored with corresponding subscriber information. Also, upon sensing the input signal of the instant message output key for outputting a stored instant message, the control unit 10 checks the identifier information of the stored instant messages. Then, upon inputting of subscriber information corresponding to an instant message to be output, the control unit 10 controls in such a way that an instant message corresponding to the identifier information of the input subscriber information is output from among the stored instant messages.

A camera module 50 obtains image data by photographing an image and includes a camera sensor for converting an optical signal obtained by photographing into an electric signal. According to an exemplary implementation, the camera sensor may be a charge-coupled device (CCD) sensor.

A signal processing unit 60 receives an image signal output from the camera module 50, and converts the received image signal into a digital image signal. The signal processing unit 60 may include a digital signal processor (DSP).

An image processing unit 70 functions to generate screen data for displaying an image signal output from the signal processing unit 60. The image processing unit 70 transmits an image signal, which has been received under the control of the control unit 10, according to the size of a display unit 80, and also compresses or decompresses the image data. The camera module 50, the signal processing unit 60, and the image processing unit 70 may be unified as one camera section.

The display unit 80 displays image data output from the image processing unit 70, and displays user interface which represents execution of a corresponding photographing function. In an exemplary implementation, the display unit 80 may utilize a liquid crystal display (LCD). In this case, the display unit 80 may include an LCD controller, a memory for storing image data, an LCD display element, etc. When an LCD employing a touch screen scheme is used, the key pad unit 27 and the LCD may be an input section. The display unit 80 includes an image data display unit to output an image data.

The operation of the wireless terminal will now be described with reference to FIG. 1. In the case of an outgoing mode, when a user selects an outgoing mode after performing a dialing operation using the keypad 27, the control unit 10 recognizes the operation, processes the received dial information through the modem 23, converts the dial information into an RF signal through the RF unit 21, and then outputs the converted RF signal. Thereafter, when a response signal is generated from a called subscriber, the control unit 10 recognizes the response signal through the RF unit 21 and the modem 23. Then, a voice communication channel is formed by the audio processing unit 25, so that it becomes possible for the user to communicate with the called subscriber. Also, in the case of an incoming mode, the control unit 10 recognizes that the wireless terminal is in the incoming mode by the modem 23, and generates a ring signal by the audio processing unit 25. Thereafter, when the user selects a response to the ring signal, the control unit 10 recognizes it, and forms a voice communication channel using the audio processing unit 25, so that it becomes possible for the user to communicate with a calling subscriber. While voice communication has been described as an example in the outgoing mode and incoming mode, it will be understood that the operation may be applied to data communication for the communication of packet data and image data instead of, or in addition to, the voice communication. Also, during a waiting mode or a character communication mode, the control unit 10 displays character data processed by the modem 23 on the display unit 80.

The operation of the wireless terminal for storing instant messages generated during the execution of the messenger service function and for outputting the stored instant messages according to an exemplary embodiment of the present invention will now be described. When a messenger service subscriber inputs subscriber information using the keypad 27, the control unit 10 determines if the input subscriber information is correct information by exchanging related information with the server, and executes the messenger service function, and generates an instant message according to an execution operation. When the subscriber operates the instant message storage key by using the keypad 27, the control unit 10 stores the instant message in the memory 29 by applying the subscriber information to the instant message. Also, when the subscriber operates the instant message output key by using the keypad 27, the control unit 10 checks identifier information of stored instant messages. Then, when the subscriber inputs subscriber information, the control unit 10 controls the memory 29 and the display unit 80, such that instant messages applied to the same identifier information as that corresponding to the input subscriber information, from among the stored instant messages, are read and output.

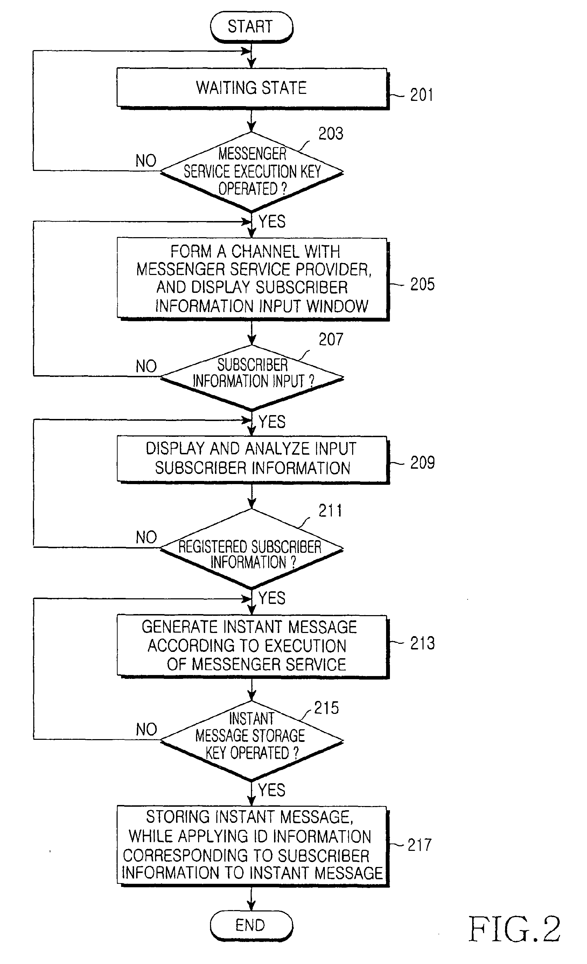

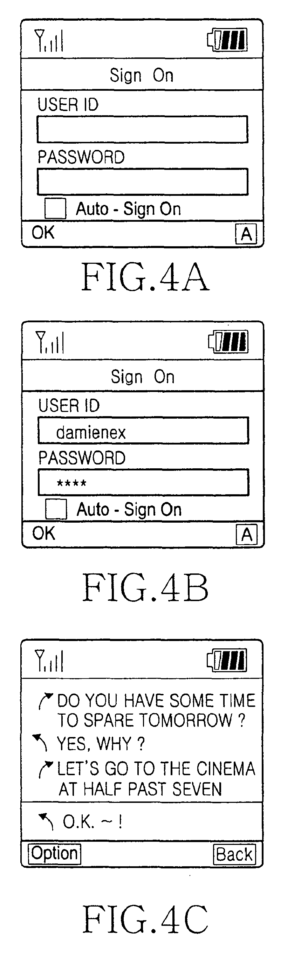

FIG. 2 is a flowchart illustrating the procedure of storing an instant message generated during the execution of the messenger service function according to an exemplary embodiment of the present invention, and FIGs. 4A to 4C are views for explaining the operation of inputting subscriber information for a messenger service according to an exemplary embodiment of the present invention.

The operation for storing an instant message generated during the execution of the messenger service function in a wireless terminal having the messenger service function will now be described with reference to FIGs. 2 and 4A to 4C. When the messenger service subscriber operates a messenger service execution key by using the keypad 27 in step 201 which is in a waiting state, the control unit 10 recognizes the operation in step 203 and proceeds to step 205. In step 205, the control unit 10 enters a messenger service function execution mode, in which, when the subscriber selects a messenger service provider (for example, Yahoo, AOL, MSN or ICQ), the control unit 10 controls the RF unit 21 to form a channel with the selected messenger service provider. In an exemplary implementation, a messenger service provider may be set as a default, so that the control unit 10 may automatically form a channel with the set messenger service provider when the user operates the messenger service execution key. The control unit 10 controls the memory 29 and the display unit 80 such that a subscriber information input screen for executing the messenger service function is displayed as shown in FIG. 4A. In an exemplary implementation, the subscriber information includes the subscriber's ID information and password information. Therefore, the subscriber information input screen includes input boxes for the subscriber's ID and password in order to authenticate the messenger service subscriber, and also includes an auto-sign-on selection box which enables the subscriber ID information to be automatically input.

When the subscriber inputs subscriber information (for example, subscriber's ID information and password information) on the displayed subscriber information input screen by using the keypad 27, the control unit 10 senses the input information in step 207, and then proceeds to step 209. In step 209, the control unit 10 controls the memory 29 and the display unit 80 such that the input subscriber information is displayed as shown in FIG. 4B and the input subscriber information is analyzed. In step 211, the control unit 10 determines if the input subscriber information is registered subscriber information. When it is determined that the input subscriber information is registered subscriber information, the control unit 10 proceeds to step 213 of executing the messenger service function. In step 213, the control unit 10 controls the memory 29 and display unit 80 such that instant messages generated according to the execution operations of the subscriber and a counterpart (who executes the messenger service function with the subscriber) are displayed as shown in FIG. 4C.

Thereafter, the subscriber operates the instant message storage key by using the keypad 27, the control unit 10 senses it in step 215, and proceeds to step 217. In step 217, the control unit 10 controls the memory 29 in such a manner that the instant messages can be stored in the memory 29 by applying or appending identifier information (such as an index) corresponding the subscriber information to the instant messages.

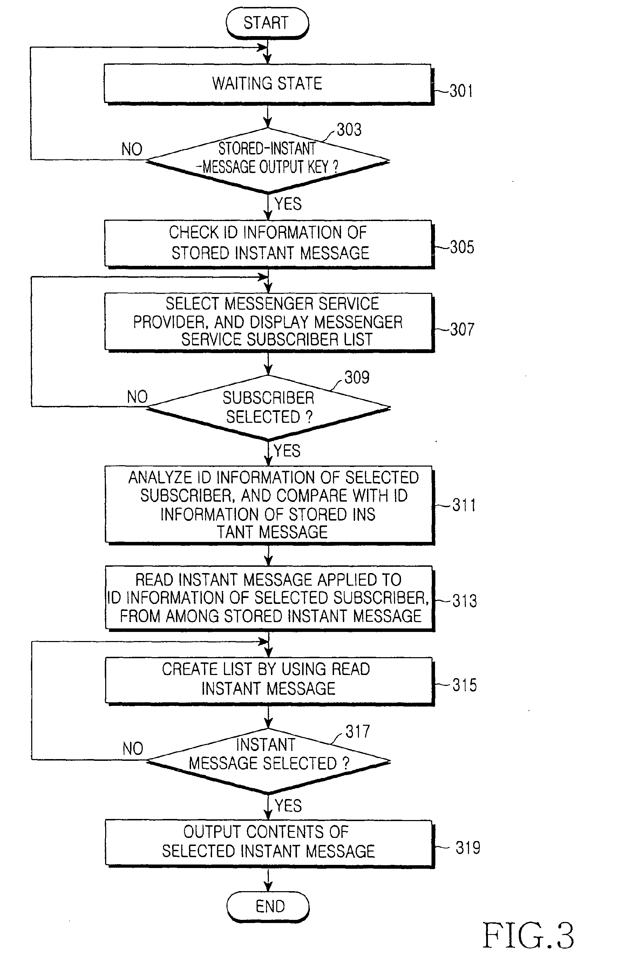

FIG. 3 is a flowchart illustrating the procedure of outputting a stored instant message according to an embodiment of the present invention, and FIGs. 5A to 5C are views for explaining the operation of outputting a stored instant message according to an embodiment of the present invention.

The operation of outputting an instant message stored in a wireless terminal having the messenger service function will now be described with reference to FIGs. 3 and 5A to 5C. When the messenger service subscriber operates a stored-instant-message output key by using the keypad 27 in step 301 which is in a waiting state, the control unit 10 senses it in step 303, and proceeds to step 305. In step 305, the control unit 10 controls the memory 29 such that the control unit 10 enters an instant message output mode and analyzes the stored instant messages to check identifier information of the stored instant messages. The identifier information represents index information corresponding to the subscriber information, which is input in order to execute the messenger service, and the messenger service provider information. For example, the subscriber information input for executing the messenger service and corresponding identifier information may be set as shown in Table 1.

**Table 1**

| Messenger Service Provider Information | Subscriber Information (ID) | Identifier Information |
|---|---|---|
| Yahoo | damier | 1000 0001 |
| Yahoo | damierex | 1000 0010 |
| Yahoo | damier3 | 1000 0011 |
| MSN | samsung22 | 0100 0001 |
| MSN | samsung50 | 0100 0010 |
| AOL | elmo | 0010 0001 |
| AOL | ky33 | 0010 0010 |

In step 307, the control unit 10 controls the memory 29 and the display unit 80 so as to display the messenger service providers (for example, Yahoo, AOL, MSN, and ICQ). Also, when the subscriber selects a messenger service provider, the control unit 10 controls the memory 29 and display unit 80 such that a list of messenger service subscribers registered to the selected messenger service provider is displayed as shown in FIG. 5A. In addition, a messenger service provider (for example, an avatar service provider which has been previously used) may be set as a default, so that a list of messenger service subscribers, which has been registered to the messenger service provider set as a default, may be displayed without any selection of the subscriber.

When the messenger service subscriber selects one of subscribers displayed in the messenger service subscriber list by using the keypad 27 in order to output the instant messages for the selected subscriber, the control unit 10 senses the selection in step 309, and then proceeds to step 311. In step 311, the control unit 10 controls the memory 29, so as to analyze the subscriber information about the selected subscriber and to check identifier information corresponding to the subscriber information. Then, the checked identifier information is compared with the identifier information of the stored instant messages.

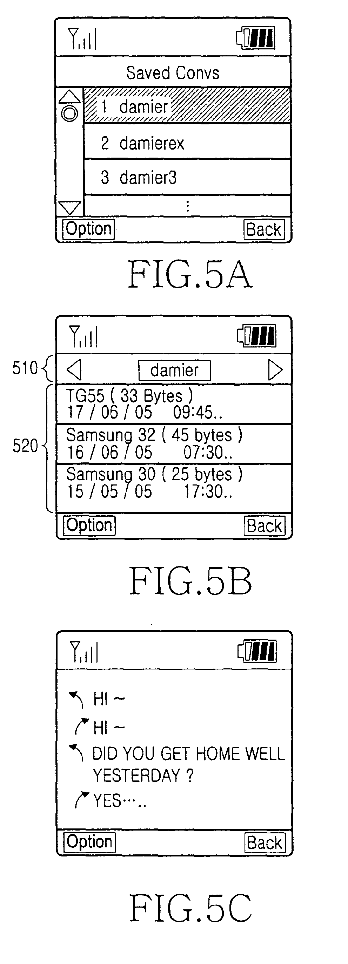

Next, the control unit 10 proceeds to step 313, in which the control unit 10 reads instant messages having the same identifier information as that corresponding to the selected subscriber information, from among the stored instant messages, and then proceeds to step 315. In step 315, the control unit 10 controls the memory 29 and the display unit 80 such that the control unit 10 creates and displays an instant message list including the read instant messages, as shown in FIG. 5B. In FIG. 5B, reference numeral 510 represents subscriber information, and reference numeral 520 represents instant messages stored in connection with the subscriber information. The subscriber information displayed as reference numeral 510 may be changed to different subscriber information by a key operation (for example, a wheel operation using a direction key). In this case, steps 311 to 315 are repeated to re-construct an instant message list based on the changed subscriber information.

Thereafter, when the subscriber selects an instant message, the contents of which are desired to be output by the subscriber, from the displayed instant message list, the control unit 10 senses it in step 317, and proceeds to step 319. In step 319, the control unit 10 controls the memory 29 and the display unit 80 such that the contents of the selected instant message is displayed as shown in FIG. 5C.

According to exemplary embodiments of the present invention as described above, the wireless terminal having the messenger service function recognizes and stores instant messages, which are generated during the execution of the messenger service function, based on subscriber information, and outputs the stored instant messages according to each piece of subscriber information. Therefore, if a messenger service subscriber uses a plurality of identifiers in order to store the instant messages, or if a plurality of messenger service subscribers use different identifiers to store the instant messages, each messenger service subscriber may rapidly and precisely check instant messages stored by himself during the execution of the messenger service, thereby improving subscriber convenience.

While the present invention has been shown and described with reference to certain exemplary embodiments thereof, it will be understood by those skilled in the art that various changes in form and details may be made therein without departing from the spirit and scope of the invention as defined by the appended claims. For example, the messenger service function, the instant message storing function, and the stored-instant-message output function may be executed by means of the operation of separate function keys and/or the selection of a separate menu. Also, in order to execute the stored-instant-message output function, the subscriber may select subscriber information from a relevant list, or may directly input the subscriber information. In addition, the subscriber information may be input as defaults in numerical order or in alphabetical order. Accordingly, the scope of the invention is not limited by the above-described exemplary embodiments, but is defined by the accompanying claims and the equivalents thereof.

## Claims

1. A method for storing an instant message in a terminal comprising a messenger service function, the method comprising the steps of:
executing a messenger service function when subscriber information for executing the messenger service function is input;
generating an instant message according to the execution of the messenger service function; and
storing the generated instant message while applying identifier information corresponding to the subscriber information to the generated instant message, when an instant message storage is selected.

2. The method as claimed in claim 1, wherein the step of executing the messenger service function comprises:
displaying a subscriber information input window for inputting the subscriber information;
analyzing input subscriber information to determine if the input subscriber information comprises registered subscriber information, when the subscriber information is input on the displayed subscriber information input window; and
executing the messenger service function when the input subscriber information is determined to comprise registered subscriber information.

3. The method as claimed in claim 1, wherein the subscriber information comprises at least one of an identification (ID) information and a password information.

4. The method as claimed in claim 2, wherein the subscriber information input window comprises at least one of a subscriber identification (ID) information input box and a password information input box, for authenticating the messenger service subscriber, and a selection box for automatic input of the subscriber ID information.

5. A method for outputting an instant message stored in a terminal comprising a messenger service function, the method comprising the steps of:
checking identifier information of a stored instant message, when an instant message output for outputting the stored instant message is selected;
comparing identifier information of subscriber information corresponding to an instant message to be output, with the identifier information of the stored instant message, when the subscriber information is input; and
reading an instant message of identifier information corresponding to the input subscriber information, and outputting the read instant message.

6. The method as claimed in claim 5, wherein the step of outputting the read instant message comprises:
creating and displaying an instant message list comprising the read instant message; and
outputting contents of a selected instant message, when the instant message is selected from the displayed instant message list.

7. The method as claimed in claim 6, wherein the instant message list comprises at least one of subscriber information and an instant message, to which subscriber information is appended.

8. The method as claimed in claim 5, wherein the subscriber information comprises at least one of an identification (ID) information and password information.

9. The method as claimed in claim 5, wherein the subscriber information is automatically input in an order.

10. A terminal comprising a messenger service function, the terminal further comprising:
an input for receiving subscriber information for executing a messenger service function;
a controller for executing the messenger service function; and
a memory for storing the generated instant message and identifier information corresponding to the subscriber information;
wherein:
the messenger service function is executed when subscriber information for executing the messenger service function is input;
the instant message is generated according to the execution of the messenger service function; and
the generated instant message is stored in the memory while applying identifier information corresponding to the subscriber information to the generated instant message, when an instant message storage is selected.

11. The terminal as claimed in claim 10, the terminal further comprising a display, wherein, when the messenger service function is executed:
a subscriber information input window for inputting the subscriber information is displayed on the display;
input subscriber information is analyzed to determine if the input subscriber information comprises registered subscriber information, when the subscriber information is input on the displayed subscriber information input window; and
the messenger service function is executed when the input subscriber information is determined to comprise registered subscriber information.

12. The terminal as claimed in claim 10, wherein the subscriber information comprises at least one of an identification (ID) information and a password information.

13. The terminal as claimed in claim 11, wherein the subscriber information input window comprises at least one of a subscriber identification (ID) information input box and a password information input box, for authenticating the messenger service subscriber, and a selection box for automatic input of the subscriber ID information.

14. The terminal as claimed in claim 10 further comprising an output for outputting an instant message stored in the memory;
wherein identifier information of a stored instant message is checked, when an instant message output for outputting the stored instant message is selected;
identifier information of subscriber information corresponding to an instant message to be output, is compared with the identifier information of the stored instant message, when the subscriber information is input; and
an instant message of identifier information corresponding to the input subscriber information is read and output.

15. The terminal as claimed in claim 14, wherein, when outputting the read instant message,
an instant message list comprising the read instant message is created and displayed on the display; and
contents of a selected instant message is output, when the instant message is selected from the displayed instant message list.

16. The terminal as claimed in claim 15, wherein the instant message list comprises at least one of subscriber information and an instant message, to which subscriber information is appended.

17. The terminal as claimed in claim 14, wherein the subscriber information comprises at least one of an identification (ID) information and password information.

18. The terminal as claimed in claim 10, wherein the subscriber information is automatically input in an order.
